# EUROPEAN PATENT SPECIFICATION

(11) **EP 3 549 710 B1**
(45) Date of publication and mention of the grant of the patent: **21.04.2021**
(21) Application number: 19166162.8
(22) Date of filing: 29.03.2019
(51) Int. Cl.: B23K 26/00, B23K 26/0622, B23K 26/08, B23K 26/53, B23K 26/55, B23K 37/04, B23K 103/00

(54) **PROCESSING METHOD, PROCESSING SYSTEM, AND COMPUTER PROCESSING PROGRAM**
VERARBEITUNGSVERFAHREN, VERARBEITUNGSSYSTEM UND COMPUTER-VERARBEITUNGSPROGRAMM
PROCÉDÉ, SYSTÈME ET PROGRAMME D'ORDINATEUR DE TRAITEMENT

(30) Priority: 30.03.2018 JP 2018069064
(43) Date of publication of application: 09.10.2019
(73) Proprietor: DGSHAPE Corporation, Hamamatsu-shi, Shizuoka 431-2103 (JP)
(72) Inventor: YOSHIDA, Makoto, Hamamatsu-shi, Shizuoka 4312103 (JP); MAEDA, Toshio, Hamamatsu-shi, Shizuoka 4312103 (JP); UEDA, Jun, Hamamatsu-shi, Shizuoka 4312103 (JP)
(74) Representative: Grünecker Patent- und Rechtsanwälte PartG mbB

(56) References cited:
- JP-A- 2014 105 147
- JP-A- 2016 187 835
- US-A1- 2015 367 442
- US-B2- 6 974 323

## Description

The present invention relates to a processing method, a processing system, and a computer processing program.

### Related Art

There has been known a processing device for obtaining an object by cutting a material such as metal and plastic (e.g., see Japanese Patent Application Publication No. H10-244439).

Unnecessary portions of the material have to be cut off to obtain the object. Thus, in the conventional cutting, the unnecessary portions are cut off with a cutting tool being moved along a processing route (a processing path) set by a CAM system.

There also has been known a technique of processing a material by heating with a high-output laser such as a CO₂ laser (e.g., see Japanese Patent Application Publication No. 2005-103625). The heating allows the unnecessary portions of the material to be cut off as well. A processing method, a processing system, and a processing program according to the preambles of independent claims 1, 5 and 6, respectively, is disclosed in JP 2016 187835 A. A further example is disclosed in US 6 974 323 B2.

### SUMMARY OF THE INVENTION

The object to be processed by the processing device may be a dental prosthesis. Such a prosthesis is made of ceramic
brittle materials such as zirconia and zirconia-mixed ceramic. A completely sintered compact of the ceramic brittle material has better hardness, wear resistance, heat resistance, corrosion resistance, and the like than metal or plastic. Also, the completely sintered compact of the ceramic brittle material is extremely hard.

When cutting such a hard material, taking into consideration the load on the cutting tool, it has been required to set the processing route in detail and to slow down the movement speed of the cutting tool. Thus, there has been a problem of increase of processing time.

In addition, when heating is applied, there has been a problem of a rough cut surface due to deformation and change of the properties of the material around the cut portion because of the heat generated in the processing. The effect of the deformation and change of the properties of the material is more apparent when forming a small object such as the dental prosthesis.

An object of the present invention is to provide a processing method that allows unnecessary portions of a material to be cut off in a short time without deforming or changing the properties of the material, a processing system for implementing the processing method, and a processing program executed by the processing system.

The present invention for achieving the abovementioned object is defined in the processing method claim 1, the processing system claim 5 and the computer processing program of claim 6. Preferred embodiments are laid down in the dependent claims.

Other features of the present invention will be apparent from the descriptions in this specification.

According to the present invention, it is possible to cut off unnecessary portions of a material in a short time without deforming or changing the properties of the material.

### BRIEF DESCRIPTION OF THE DRAWINGS

Fig. 1 is a schematic diagram that illustrates a configuration of a processing system according to an embodiment.
Fig. 2 is a diagram that schematically illustrates an irradiated part according to the embodiment.
Fig. 3 is a diagram that schematically illustrates the irradiated part according to the embodiment.
Fig. 4 is a flowchart that illustrates operations of the processing system according to the embodiment.
Fig. 5A is a diagram for describing a processing method according to the embodiment.
Fig. 5B is a diagram for describing the processing method according to the embodiment.
Fig. 5C is a diagram for describing the processing method according to the embodiment.
Fig. 5D is a diagram for describing the processing method according to the embodiment. according to the embodiment.

### DETAILED DESCRIPTION OF THE INVENTION

### == Summary of Embodiment ==

A processing method according to this embodiment includes irradiating an irradiated part of a material with laser light and cutting off an unnecessary portion. Use of the laser light enables non-contact processing.

A laser light-transmittable material (light-transmittable material) is used as the material according to this embodiment. For example, glass ceramic and a zirconia material may be used as the light-transmittable material. In a case of the glass ceramic, an arbitrary element or particle may be doped. The zirconia material may be a compound material such as zirconia-mixed glass ceramic or may be single zirconia having a constant transmissibility. The light transmissibility of the material may not have to be 100% as long as it is a value that allows the laser light to reach a predetermined position (irradiated part) for processing.

The unnecessary portion is a portion of the material other than a portion to be an object. The unnecessary portion is cut off by irradiating the material with the laser light. The obj ect can be obtained by cutting off the unnecessary portion from the material. The object is, for example, a dental prosthesis and the like.

Light of a short-pulse laser may be used as the laser light. Particularly, it is preferable to use light of an ultrashort pulse laser to achieve direct laser light irradiation of the irradiated part in the material. The ultrashort pulse laser is a laser that emits laser light with a pulse width of several picoseconds to several femtoseconds. Short time irradiation of the irradiated part in the material using the laser light of the ultrashort pulse laser enables ablation (non-heating process) . In the ablation, since a part melted by the laser light is immediately evaporated, dispersed, and removed, heat damage of the irradiated part is less than the general laser process (heating). The ablation is especially effective at processing a small object such as a dental prosthesis, for example. The laser is not limited to the ultrashort pulse laser as long as the laser light can perform the ablation.

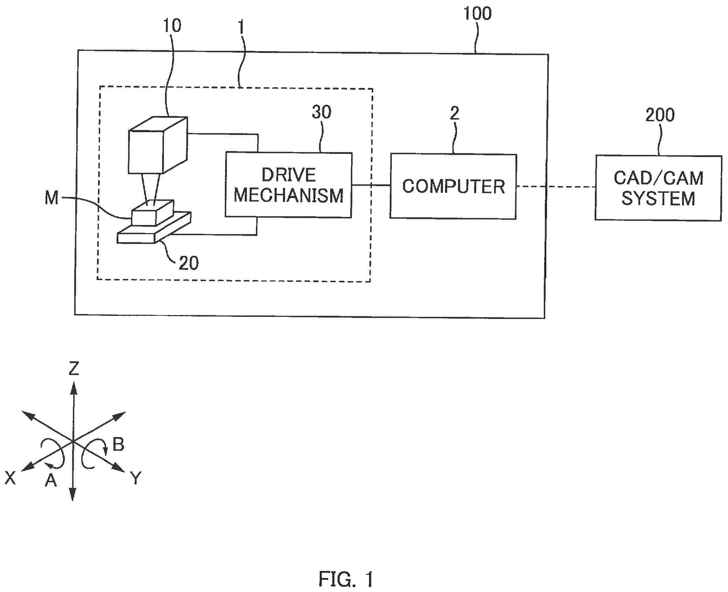

The laser light irradiation of the material is performed based on (later-described) processing data created in advance. The processing method according to this embodiment is implemented by a processing system 100 illustrated in Fig. 1. The processing system 100 processes the material by executing a processing program created by a CAD/CAM system 200. Hereinafter, "processing data," "processing system," and "processing by the processing system (processing method)" are described in detail.

### == Processing Data ==

The processing data is data used by the processing system 100 to obtain the object by processing the material. The processing data is created by the CAD/CAM system 200 based on three-dimensional data of the object and three-dimensional data of the material. For example, in the case of processing the dental prosthesis, the processing data is created using three-dimensional data obtained by scanning the inside of a mouth with a CCD camera or an X-ray CT. The three-dimensional data of the object is STL data, solid data used by a three-dimensional CAD, or data such as 3MF or AMF used by a 3D printer.

The processing data according to this embodiment at least includes irradiated part data, order data, and processing route data. Multiple pieces of the data are created according to the number of the irradiated parts.

The irradiated part is a region in the material that is set for forming a cut part in the material. In the irradiated part irradiated with the laser light, a cavity or a cuttable property-changed portion according to a spot diameter of the laser light. The cut part is formed by radiating the laser light along the irradiated part and forming the cavity or the cuttable property-changed portion in all the irradiated parts. Forming of the cut part makes it possible to cut off the unnecessary portion at a surface through the cut part (cut surface) in the material.

A single piece of the irradiated part data includes multiple pieces of the point data aligned in one dimension, for example. That is, the multiple pieces of the point data included in the single piece of the irradiated part data form a line segment in a predetermined direction. The predetermined direction is an arbitrary direction in a material M. The multiple pieces of the point data are set at predetermined intervals according to the size of the material or the shape of the object. Each of the point data has a three-dimensional (XYZ) coordinate value and vector information.

The coordinate value is used for determining a focal position of the laser light (i.e., the coordinate value corresponds to the position on the material surface or in the material irradiated with the laser light). The focal position of the laser light is varied depending on the refractive index of the material. Thus, the coordinate value is, according the present invention, corrected, taking into consideration the refractive index of the material. The vector information is used for determining the emission direction of the laser light. In this embodiment, the vector information used in processing of a material is common to all the irradiated part data. That is, the laser light radiated based on the irradiated part data in this embodiment is radiated from the same direction on all the multiple irradiated parts. When the laser light enters the material, an effect of reflection occurs on the material surface. Thus, when setting the vector information, it is more preferable to set the vector information such that the laser light enters perpendicularly to the material surface . The irradiated part data may not be the multiple pieces of the point data as long as it is data that can remove the unnecessary portion of the material. For example, the irradiated part data may be one-dimensional region data that specifies an area of the material irradiated with the laser light.

Among the multiple pieces of the point data included in the irradiated part data, an interval between adjacent pieces of point data is preferably smaller than the spot diameter of the laser light. In this case, the cavities or the cuttable property-changed portions corresponding to the adjacent pieces of point data are connected; thus, it is easy to cut off the unnecessary portion when the cut part is formed, and the precision of the shape of the cut surface is improved.

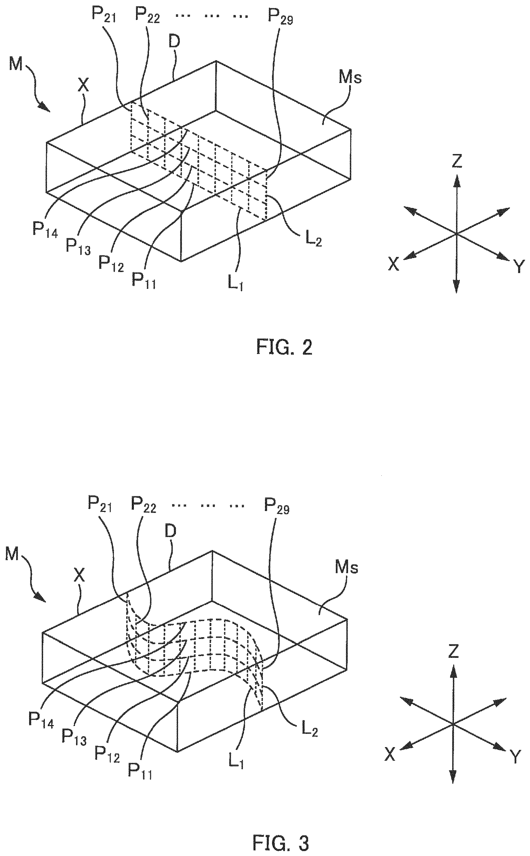

Examples of the shape of the irradiated part are described with reference to Figs. 2 and 3. Each of Figs. 2 and 3 is a diagram that illustrates the material M and a portion X obtained by cutting off an unnecessary portion D of the material M. X, Y, and Z axes illustrated in Figs. 2 and 3 are three axes orthogonal to each other (the same applies hereafter).

In these examples, a first line segment L₁ is set in a direction of the Y axis . The irradiated part is determined based on the first line segment L₁. The irradiated part data of this case includes the multiple pieces of the point data set at predetermined intervals along the first line segment L₁. The shape of the first line segment L₁ is not particularly restricted and may be, for example, any of a straight line, a curved line, a polygonal line, and the like. Fig. 2 illustrates an example of the irradiated part when the first line segment L₁ is a straight line, and Fig. 3 illustrates an example of the irradiated part when the first line segment L₁ is a curved line. The shape of the first line segment L₁ may be set while taking into consideration the shape of the object. The predetermined direction in the examples of Figs. 2 and 3 is a direction parallel to a surface Ms of the material M which the laser light enters (Y axis direction). That is, the single first line segment L₁ is positioned at a uniform depth from the surface Ms. The first line segment L₁ set as described above is a line segment along the boundary of the unnecessary portion D with the material M viewed from a direction of the Z axis.

As illustrated in Figs. 2 and 3, multiple first line segments L₁ may be set. The multiple first line segments L₁ can be set at predetermined intervals in a direction along the Z axis. It is easier to cut off the unnecessary portion X when the cut part is formed as the intervals between adjacent first line segments L₁ are smaller, and the precision of the shape of the cut surface is improved. In the examples of Figs. 2 and 3, four first line segments L₁ are set at intervals in the direction along the Z axis . Irradiated parts P₁₁ to P₁₄ are determined based on the four first line segments L₁.

On the other hand, in these examples, a second line segment L₂ is set in the Z axis direction. The irradiated part is determined based on the second line segment L₂. The irradiated part data of this case includes multiple pieces of the point data set at predetermined intervals along the second line segment L₂. The second line segment L₂ is set in a direction different from the direction (the predetermined direction) of the first line segment L₁. In Figs. 2 and 3, the second line segment L₂ is set in the Z axis direction. The direction different from the predetermined direction is a direction angled with respect to the predetermined direction (i.e., direction not parallel to the predetermined direction) and is, for example, a direction orthogonal to the predetermined direction. The shape of the second line segment L₂ is not particularly restricted and may be, for example, any of a straight line, a curved line, a polygonal line, and the like. The shape of the second line segment L₂ may be set while taking into consideration the shape of the object.

As illustrated in Figs. 2 and 3, multiple second line segments L₂ may be set. The multiple second line segments L₂ can be set at predetermined intervals in the direction along the Y axis. It is easier to cut off the unnecessary portion X when the cut part is formed by irradiating the irradiated part with the laser light as the intervals between adjacent second line segments L₂ are smaller, and the precision of the shape of the cut surface is improved.

When the multiple first line segments L₁ and the multiple second line segments L₂ are set, the irradiated part based on these line segments are set in a grid-pattern. It is easier to cut off the unnecessary portion X as the area of each grid is smaller, and the precision of the shape of the cut surface is improved. In order to reduce the area of the grid, at least either of the intervals of the multiple first line segments L₁ and the intervals of the multiple second line segments L₂ may be reduced. In the examples of Figs. 2 and 3, nine second line segments L₂ are set to cross the four first line segments L₁ at intervals. Irradiated parts P₂₁ to P₂₉ are determined based on the nine second line segments L₂.

The order data is data indicating which irradiated part out of the multiple irradiated parts is to be irradiated with the laser light first (the order of the laser light irradiation) . When there are the layered irradiated parts in the emission direction of the laser light, the order information is set so as to irradiate the layered irradiated parts with the laser light in order from the irradiated part farthest from the material surface (in descending order of distance from the material surface) which the laser light enters. A distance between the material surface and the irradiated part is determined according to the above-described direction of the laser light entry. When the single piece of the irradiated part data includes the multiple pieces of the point data, the order data may include data indicating which point data indicates the coordinate value to be irradiated with the laser light first.

For example, in Fig. 2, three-dimensional coordinate values indicating positions of the irradiated parts P₁₁ to P₁₄ and P₂₁ to P₂₉ and the emission direction of the laser light (common to all pieces of the irradiated part data) are set in the irradiated part data. In the example of Fig. 2, the emission direction of the laser light is set such that the laser light is emitted downward from above along the Z axis.

In this case, the irradiated parts P₁₁ to P₁₄ are layered in the emission direction of the laser light. Thus, in the order data, along the Z axis, the irradiated part P₁₁, which is the farthest from the surface Ms of the material M which the laser light enters, is set as the first part (first), and the irradiated part P₁₄, which is the closest to the surface Ms of the material M, is set as the last part (fourth). That is, in the example of Fig. 2, the order of processing is set such that the irradiated parts are processed from the bottom to the top along the Z axis.

In addition, in the case of Fig. 2, the coordinate values indicated by the multiple pieces of the point data in each of the irradiated parts P₂₁ to P₂₉ are layered in the emission direction of the laser light. Thus, in the order data, along the Z axis, the coordinate value indicated by the point data, which is the farthest from the surface Ms of the material M which the laser light enters, is set as the first part, and the coordinate value indicated by the point data, which is the closest to the surface Ms, is set as the last part in each of the irradiated parts P₂₁ to P₂₉. That is, in each of the irradiated parts P₂₁ to P₂₉, the order of processing of the coordinate values indicated by the point data is set such that the coordinate values are processed from the bottom to the top along the Z axis.

Even when there is a not layered irradiated part in the emission direction of the laser light, the order data is also applied to the unlayered irradiated part. Note that there is no constraint on the order of the laser light irradiation (order of processing) of the unlayered irradiated part. For example, the laser light irradiation of the unlayered irradiated part may be performed before the laser light irradiation of the layered irradiated parts, or it may be performed after the laser light irradiation of all the layered irradiated parts is completed. Or, the laser light irradiation of the unlayered irradiated part may be performed in the middle of the processing of the layered irradiated parts.

The processing route data is data for setting a route of the laser light irradiation of the irradiated parts. For example, in the example of Fig. 2, a route in the processing route data of each of the irradiated parts Pn to P₁₄ is set such that the laser light is radiated along the Y axis, and a route in the processing route data of each of the irradiated parts P₂₁ to P₂₉ is set such that the laser light is radiated along the Z axis.

In addition, the processing data may include information on output of the laser light (spot diameter, irradiation time, intensity, and the like of the laser light for irradiation of each point).

The CAD/CAM system 200 outputs the created processing data to the processing system 100. The processing system 100 processes the material by irradiating a position corresponding to the processing data with the laser light. A format of the outputted data is not particularly limited as long as it can be used in the processing system 100.

### == Processing System ==

Fig. 1 is a diagram that schematically illustrates the processing system 100. The processing system 100 includes a processing device 1 and a computer 2. Note that the processing system 100 may include only the processing device 1 by implementing functions of the computer 2 using the processing device 1.

The processing device 1 according to this embodiment includes drive shafts respectively corresponding to five axes (X axis, Y axis, Z axis, A rotational axis (rotational axis about X axis), and B rotational axis (rotational axis about Y axis)) . The processing device 1 processes the material M by irradiating the irradiated parts with the laser light based on the processing data. The processing device 1 includes an emitter 10, a holder 20, and a drive mechanism 30.

The emitter 10 irradiates the material M with the laser light. The emitter 10 includes an oscillator of the laser light and an optical system such as a lens unit and a galvano mirror for guiding the laser light from the oscillator to the material. The holder 20 holds the material M. A way of holding the material is not particularly limited. For example, like a case of the conventional cutting, a disc-shaped material may be held by clipping it with a clamp, or a block-shaped material may be held by bonding a metal pin thereon and inserting the pin into the holder 20. The drive mechanism 30 includes a drive motor and the like. The drive mechanism 30 moves the emitter 10 and the holder 20 relative to each other. Note that, according to the processing method of this embodiment, it is possible to cut off the unnecessary portion by emitting the laser light from one direction with the material fixed. That is, there is no need to rotate the emitter 10 and the holder 20 about the A rotational axis or the B rotational axis.

An adjuster for adjusting an emission pattern of the laser may be provided. For example, the adjuster is a member such as a galvano mirror, a Fresnel lens, a diffractive-optical element (DOE), a liquid crystal on silicon-spatial light modulator (LCOS-SLM), and the like. The adjuster is arranged, for example, between the oscillator and the lens unit in the emitter 10.

For example, when the irradiated parts are based on multiple line segments, use of the LCOS-SLM as the adjuster allows each irradiated part based on a single line segment among all the irradiated parts to be irradiated with the laser light at once. The LCOS-SLM can form the laser light from the oscillator in any shape by adjusting the orientation of the liquid crystal. For example, the LCOS-SLM enables emission of laser light in a shape of line segment (one-dimensional-shaped laser light) by forming the focal point of point-like laser light to linear. Use of such an LCOS-SLM enables the ablation to be performed on each irradiated part based on a single line segment among all the irradiated parts with one-time irradiation, for example. That is, since the use of the LCOS-SLM allows the irradiated parts in the one-dimensional region to be processed all at once, it is possible to reduce the processing time.

The computer 2 controls operations of the emitter 10 and the drive mechanism 30. In specific, the computer 2 adjusts the relative positional relation between the emitter 10 and the holder 20 (material M) by controlling the drive mechanism 30 so that the irradiated part corresponding to the processing data can be irradiated with the laser light on the material surface or in the material. When the laser light enters the material, the focal position of the laser light is varied according to the refractive index of the material. The computer 2 takes into consideration the contribution of the refractive index of the material and correct the relative positional relation between the emitter 10 and the holder 20. In this case, the refractive index of the material does not have to be considered when creating the processing data. The computer 2 controls the emitter 10 to adjust the focal position of the laser light, the spot diameter and intensity of the emitted laser light, and the like, and to irradiate the material M with the laser light for a predetermined time. The spot diameter, intensity, irradiation time, and the like affect output of the emitted laser light (energy) . These values may be included in advance in the processing data as described above, or may be set by the processing device 1. The type and characteristic of the material as a target of the processing may be taken into consideration for determining the values. The computer 2 is an example of "controller."

### == Processing by Processing System ==

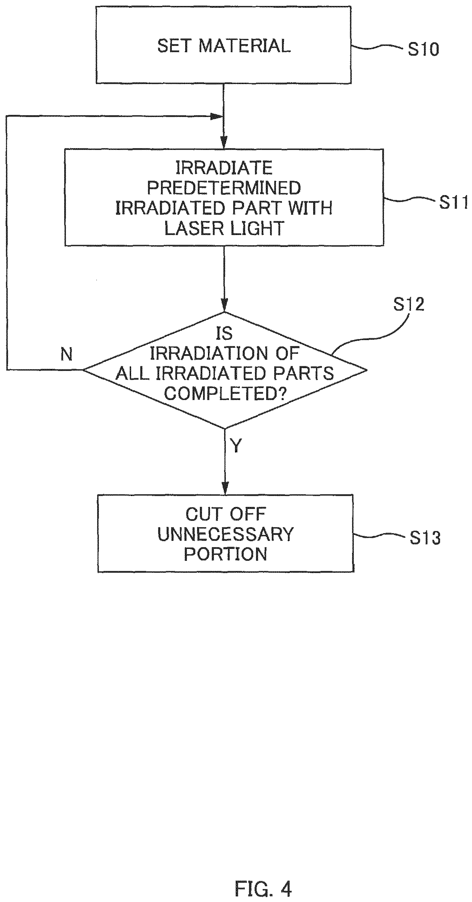

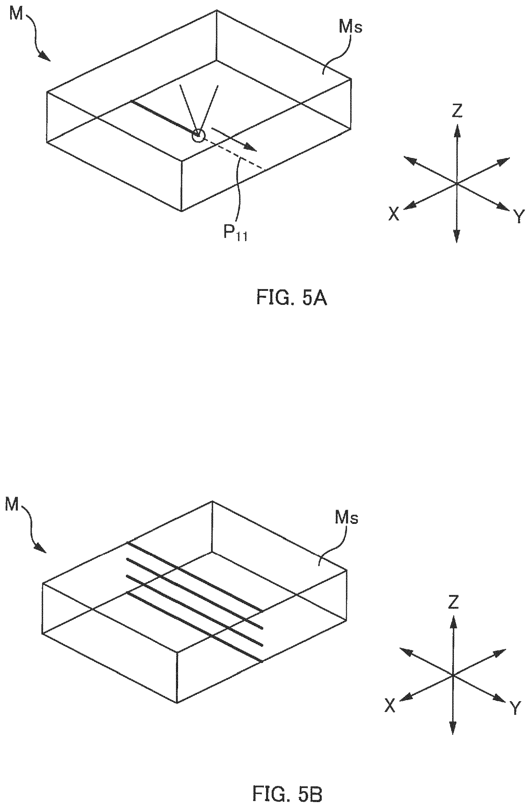

Next, a specific example of the processing method according to this embodiment is described with reference to Figs. 4 to 5E. The processing method is executed by the processing system 100. The processing method is installed as a dedicated processing program in the processing system 100 in advance. In this example, the portion X is obtained by processing the material M. Fig. 4 is a flowchart that illustrates operations of the processing system 100. Figs. 5A to 5E are diagrams that schematically illustrate the material M to be processed by the processing method according to this embodiment or the portion X. The irradiated parts exemplified in Fig. 2 are set in the material M. The processing data of the material M is created in advance by the CAD/CAM system 200.

The material M is selected and set on the holder 20 of the processing device 1 (set material; step 10). The material M according to this embodiment is a block-shaped member.

The computer 2 allows the processing device 1 to execute processing of the material M based on the processing data of the material M. The computer 2 allows the processing device 1 to irradiate the position (irradiated part), which is indicated by the irradiated part data included in the processing data, with the laser light. In this step, the computer 2 allows the irradiated part to be irradiated with the laser light based on the order data (irradiate predetermined irradiated part with laser light; step 11).

The computer 2 allows the processing device 1 to make adjustment for matching the coordinate value of the point data included in the irradiated part data and the focal position of the laser light. In specific, the computer 2 allows the processing device 1 to adjust the relative positions of the emitter 10 and the holder 20 and to adjust the orientation of the emitted light itself through the lens unit and the angle of the galvano mirror itself included in the emitter 10. The adjustment of the focal position may be performed taking into consideration the refractive index of the material M. Once the coordinate value of the point data and the focal position of the laser light coincide with each other, the computer 2 controls the emitter 10 and allows the laser light to be emitted from above along the Z axis for the predetermined time based on the vector information included in the point data.

In specific, the irradiated parts based on the first line segments L₁ are irradiated with the laser light first, and thereafter the irradiated parts based on the second line segments L2 are irradiated with the laser light. The irradiated parts based on the first line segments L₁ are irradiated with the laser light in the order of the irradiated parts Pn, P₁₂, P₁₃, P₁₄. The irradiated parts based on the second line segments L₂ are irradiated with the laser light in the order of the irradiated parts P₂₁, P₂₂, ..., P₂₉. In Figs. 5A to 5D, unprocessed irradiated parts are indicated by broken lines or dotted lines, and processed irradiated parts are indicated by bold lines. The irradiated part is the cavity or the cuttable property-changed portion according to the spot diameter of the laser light.

Fig. 5A illustrates a state in which the laser light is radiated along the irradiated part Pn. The irradiated part P₁₁ is the farthest from the surface Ms of the material M which the laser light enters among the irradiated parts Pn to P₁₄. Once the laser light irradiation of the irradiated part P₁₁ is completed, following laser light irradiation is performed in order of the irradiated parts P₁₂, P₁₃, P₁₄. That is, the irradiated parts P₁₁ to P₁₄ are irradiated with the laser light in order from the irradiated part farthest from the surface Ms. Such laser light irradiation makes it possible to remove the unnecessary portion without being affected by the change of the properties due to the laser light irradiation even when the irradiated parts are layered in the emission direction of the laser light. Fig. 5B illustrates a state in which all the irradiated parts P₁₁ to P₁₄ based on the first line segments L₁ are irradiated with the laser light.

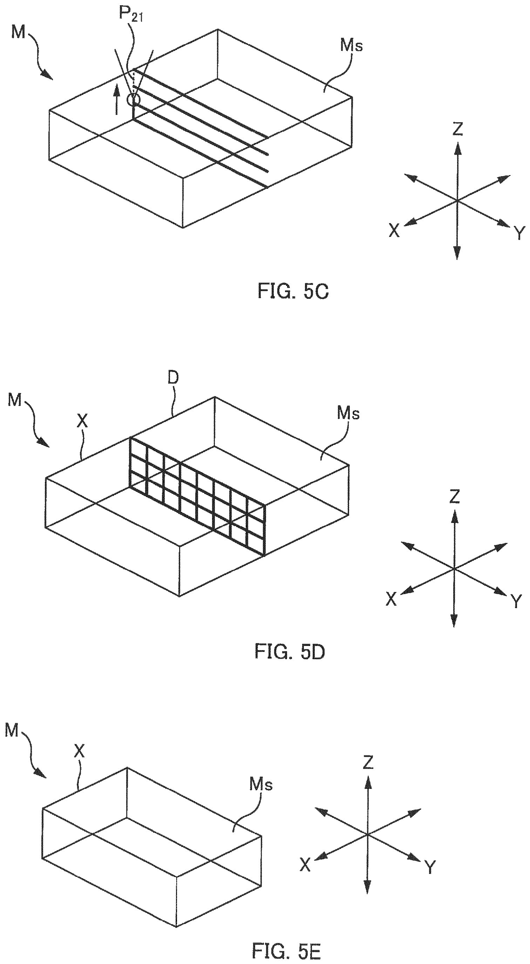

Fig. 5C illustrates a state in which the laser light is radiated along the irradiated part P₂₁. The irradiated part P₂₁ is irradiated with the laser light while moving 'the focal position from the bottom to the top along the Z axis. Such laser light irradiation makes it possible to remove the unnecessary portion without being affected by the change of the properties due to the laser light irradiation even when the irradiated parts are layered in the emission direction of the laser light. Fig. 5D illustrates a state in which all the irradiated parts P₂₁ to P₂₉ based on the second line segments L₂ are irradiated with the laser light.

Once all the irradiated parts are irradiated with the laser light in the above-described way (Y in step 12), the unnecessary portion D of the material M is cut off (cut off unnecessary portion D; step 13) . As a result, the portion X is obtained (see Fig. 5E). The object can be obtained by repeating the same processing on the unnecessary portion of the resulted portion X. When no unnecessary portion is cut off after step 12 is completed, it can be cut off easily by applying external force to the cut surface, for example.

An example in which the laser light is emitted to the material M from above along the Z axis (laser light is emitted downward) is described above; however, it is not limited thereto. The laser light may be emitted to the material M from below along the Z axis (laser light is emitted upward), or may be emitted from the side along the X or Y axis orthogonal to the Z axis (laser light is emitted in a crosswise direction). Otherwise, when the surface Ms of the material M is inclined, or depending on the shape of the portion X, the laser light may be emitted in an oblique direction. In any case, when there are layered irradiated parts in the emission direction of the laser light, the unnecessary portion can be cut off without being affected by the change of the properties of the material M by irradiating the layered irradiated parts with the laser light in the order from the irradiated part farthest from the surface Ms of the material M which the laser light enters (in descending order of distance from the material surface).

As described above, the processing method according to this embodiment includes: irradiating a light-transmittable material M with laser light to perform ablation to cut off an unnecessary portion of the material M, in which a cut part is formed in the material by radiating the laser light along an irradiated part based on a first line segment L₁ set in a predetermined direction.

As described above, since it is possible to form the cut part in the material by radiating the laser light along the irradiated part based on the line segment, the unnecessary portion can be removed efficiently. Thus, it is possible to reduce the processing time for forming the object from the material. In addition, since the ablation is used, the cut part is never deformed by the heat. Thus, the cut surface is smoothed and the precision of the cut surface is improved.

In the processing method according to this embodiment, multiple first line segments L₁ are set, and it is possible to radiate the laser light along each of the irradiated parts based on the multiple first line segments L₁. Such laser light irradiation makes it possible to form multiple cut parts in the material. The unnecessary portion thus can be cut off easily.

In the processing method according to this embodiment, the laser light is radiated along each of the irradiated parts based on multiple second line segments L₂ set in a direction different from the predetermined direction. Such laser light irradiation makes it possible to form multiple cut parts in the different direction in the material, and the unnecessary portion thus can be cut off more easily.

In the processing method according to this embodiment, the first line segment L₁ and the second line segment L₂ may be orthogonal to each other. The cut parts are formed in the grid-pattern by irradiating the irradiated parts based on the line segments with the laser light. Thus, the unnecessary portion can be cut off easily and much smoother cut surface can be formed.

In the processing method according to this embodiment, when there are layered irradiated parts in an emission direction of the laser light, the layered irradiated parts are irradiated with the laser light in order from the irradiated part farthest from a material surface which the laser light enters. Thus, the radiated laser light is never affected by the change of the properties. That is, there hardly occurs a problem in that the laser light cannot pass through the property-changed irradiated part, or a problem in that the laser light refracts or reflects in the property-changed irradiated part and accurate laser light irradiation of another irradiated part is failed. Thus, it is possible to accurately form the cut part along the irradiated part based on the set line segment.

In the processing method according to the present invention, a position corrected based on a refractive index of the material is irradiated with the laser light. With the correction of irradiation position (focal position) of the laser light considering the effect of the refractive index of the material M, it is possible to irradiate the irradiated part based on the set line segment with the laser light accurately.

The processing system 100 according to this embodiment irradiates a light-transmittable material M with laser light to perform ablation to cut off an unnecessary portion of the material M. The processing system 100 includes an emitter 10 that emits the laser light; a holder 20 that holds the material M; a drive mechanism 30 that moves the emitter 10 and the holder 20 relative to each other; and a computer 2 that controls the emitter 10 and the drive mechanism 30 to form a cut part in the material by radiating the laser light along an irradiated part based on a first line segment L₁ set in a predetermined direction. Since such a processing system 100 enables radiation of the laser light along the irradiated part based on the line segment, it is possible to form the cut part in the material. That is, it is possible to reduce the processing time for forming the object from the material. In addition, since the ablation is used, the cut part is never deformed by the heat. Thus, the cut surface is smoothed and the precision of the cut surface is improved.

A computer processing program according to the present invention, that causes the processing system 100, which irradiates a light-transmittable material M with laser light to perform ablation to cut off an unnecessary portion of the material M, to execute a process is defined in claim 6, and includes: forming a cut part in the material by radiating the laser light along an irradiated part based on a first line segment L₁ set in a predetermined direction. According to such a processing program, the processing system 100 executing the program can form the cut part in the material by radiating the laser light along the irradiated part based on the line segment. Thus, it is possible to effectively remove the unnecessary portion. That is, it is possible to reduce the processing time for forming the object from the material. In addition, since the ablation is used, the cut part is never deformed by the heat. Thus, the cut surface is smoothed and the precision of the cut surface is improved.

### == Others ==

It is also possible to supply a program in the computer using a nontransitory computer readable medium with an executable program thereon. The nontransitory computer readable medium is, for example, a magnetic recording medium (e.g., flexible disc, magnetic tape, hard disc drive), CD-ROM (read only memory), and so on.

The above embodiment is presented as an example of the invention and not intended to limit the scope of the invention. Various omissions, substitutions, and changes in the above described configurations may be made without departing from the scope of the present invention as defined in the appended claims.

### Reference Signs List

- 1: processing device
- 2: computer
- 10: emitter
- 20: holder
- 30: drive mechanism
- 100: processing system

## Claims

1. A processing method, comprising:
irradiating a light-transmittable material (M) with laser light to perform ablation to cut off an unnecessary portion of the material (M),
**characterized by** the following steps: radiating the laser light along an irradiated part based on a first line segment (L1) set in a predetermined direction,
radiating the laser light along each of irradiated parts based on a plurality of second line direction to form a cut part; segments (L2) set in a direction different from the predetermined wherein irradiation with the laser light is carried out such that the laser light focal position is corrected by taking into consideration the contribution of the refractive index of the material.

2. The processing method according to claim 1, wherein
a plurality of the first line segments (L1) are set, and radiating the laser light along each of the irradiated parts based on the plurality of the first line segments (L1).

3. The processing method according to claim 1 or 2, wherein
the first line segment (L1) and the second line segment (L2) are orthogonal to each other.

4. The processing method according to claims 2 or 3, wherein
when there are layered irradiated parts in an emission direction of the laser light, the layered irradiated parts are irradiated with the laser light in order from the irradiated part farthest from a material surface which the laser light enters.

5. A processing system (100) that is configured to irradiate a light-transmittable material (M) with laser light to perform ablation to cut off an unnecessary portion of the material (M), comprising:
an emitter (10) that is configured to emit the laser light;
a holder (20) that is configured to hold the material (M); and
a drive mechanism (30) that is configured to move the emitter (10) and the holder (20) relative to each other;
the processing system (100) being **characterized by** comprising
a controller (2) that is configured to control the emitter (10) and the drive mechanism (30) to form a cut part in the material (M) by radiating the laser light along an irradiated part based on a first line segment (L1) set in a predetermined direction, and by irradiating the laser light along each of irradiated parts based on a plurality of second line segments (L2) set in a direction different from the predetermined direction, and
taking into consideration the contribution of the refractive index of the material and correcting the relative positional relation between the emitter (10) and the holder (20).

6. A computer processing program comprising instructions to cause the controller of the processing system of claim 5 to carry out the following process: irradiating a light-transmittable material (M) with laser light to perform ablation to cut off an unnecessary portion of the material (M),
**characterized in that** radiating the laser light along an irradiated part based on a first line segment (L1) set in a predetermined direction, radiating the laser light along each of irradiated parts based on a plurality of second line segments (L2) set in a direction different from the predetermined direction to form a cut part; and irradiation with the laser light of a position with correction of the said position by taking into consideration the contribution of the refractive index of the material.

## Patentansprüche

1. Verarbeitungsverfahren, umfassend:
Bestrahlen eines lichtdurchlässigen Materials (M) mit Laserlicht, um eine Ablation durchzuführen, um einen unnötigen Abschnitt des Materials (M) abzuschneiden;
**gekennzeichnet durch** die folgenden Schritte:
Abstrahlen des Laserlichts entlang eines bestrahlten Teils basierend auf einem ersten Liniensegment (L 1), das in einer vorbestimmten Richtung eingestellt ist,
Abstrahlen des Laserlichts entlang jedes der bestrahlten Teile basierend auf einer Vielzahl zweiter Liniensegmente (L2), die in einer von der vorbestimmten Richtung verschiedenen Richtung eingestellt sind, um einen geschnittenen Teil auszubilden;
wobei die Bestrahlung mit dem Laserlicht so ausgeführt wird, dass die Laserlichtbrennpunktposition unter Berücksichtigung des Beitrags des Brechungsindex des Materials korrigiert wird.

2. Verarbeitungsverfahren nach Anspruch 1, bei dem eine Vielzahl der ersten Liniensegmente (L 1) eingestellt werden und das Laserlicht entlang jedes der bestrahlten Teile basierend auf der Vielzahl der ersten Liniensegmente (L1) abgestrahlt wird.

3. Verarbeitungsverfahren nach Anspruch 1 oder 2, bei dem
das erste Liniensegment (L1) und das zweite Liniensegment (L2) orthogonal zueinander sind.

4. Verarbeitungsverfahren nach Anspruch 2 oder 3, bei dem
wenn geschichtete bestrahlte Teile in einer Emissionsrichtung des Laserlichts vorhanden sind, die geschichteten bestrahlten Teile mit dem Laserlicht in der Reihenfolge von dem bestrahlten Teil, der am weitesten von einer Materialoberfläche entfernt ist, in die das Laserlicht eintritt, bestrahlt werden.

5. Verarbeitungssystem (100), das dazu eingerichtet ist, ein lichtdurchlässiges Material (M) mit Laserlicht zu bestrahlen, um eine Ablation durchzuführen, um einen unnötigen Abschnitt des Materials (M) abzuschneiden, umfassend:
einen Emitter (10), der dazu eingerichtet ist, das Laserlicht zu emittieren;
einen Halter (20), der dazu eingerichtet ist, das Material (M) zu halten; und
einen Antriebsmechanismus (30), der dazu eingerichtet ist, den Emitter (10) und den Halter (20) relativ zueinander zu bewegen;
wobei das Verarbeitungssystem (100) **dadurch gekennzeichnet ist, dass** es umfasst:
eine Steuereinheit (2), die dazu eingerichtet ist, den Emitter (10) und den Antriebsmechanismus (30) zu steuern, um einen geschnittenen Teil in dem Material (M) auszubilden, indem das Laserlicht entlang eines bestrahlten Teils basierend auf einem ersten Liniensegment (L1) abgestrahlt wird, das in einer vorbestimmten Richtung eingestellt ist, und indem das Laserlicht entlang jedes der bestrahlten Teile basierend auf einer Vielzahl von zweiten Liniensegmenten (L2) abgestrahlt wird, die in einer von der vorbestimmten Richtung verschiedenen Richtung eingestellt sind, und
Berücksichtigen des Beitrags des Brechungsindex des Materials und Korrektur der relativen Positionsbeziehung zwischen dem Emitter (10) und dem Halter (20).

6. Computerverarbeitungsprogramm, umfassend Anweisungen, um die Steuerung des Verarbeitungssystems nach Anspruch 5 zu veranlassen, das folgende Verfahren auszuführen:
Bestrahlen eines lichtdurchlässigen Materials (M) mit Laserlicht, um eine Ablation durchzuführen, um einen unnötigen Abschnitt des Materials (M) abzuschneiden;
**gekennzeichnet durch**
Abstrahlen des Laserlichts entlang eines bestrahlten Teils basierend auf einem ersten Liniensegment (L 1), das in einer vorbestimmten Richtung eingestellt ist,
Abstrahlen des Laserlichts entlang jedes der bestrahlten Teile basierend auf einer Vielzahl von zweiten Liniensegmenten (L2), die in einer von der vorbestimmten Richtung verschiedenen Richtung eingestellt sind, um einen geschnittenen Teil auszubilden;
und Bestrahlen einer Position mit dem Laserlicht unter Korrektur der Position unter Berücksichtigung des Beitrags des Brechungsindex des Materials.

## Revendications

1. Procédé de traitement, comprenant:
l'irradiation d'un matériau transmissible à la lumière (M) avec une lumière laser pour effectuer une ablation afin de couper une partie inutile du matériau (M),
**caractérisé par** les étapes suivantes :
l'émission de la lumière laser le long d'une partie irradiée sur la base d'un premier segment de ligne (L1) placé dans une direction prédéterminée,
l'émission de la lumière laser le long de chacune des pièces irradiées sur la base d'une pluralité de seconds segments de ligne (L2) placés dans une direction différente de la direction prédéterminée pour former une pièce découpée;
dans lequel l'émission de la lumière laser est effectuée de telle sorte que la position focale de la lumière laser est corrigée en prenant en considération la contribution de l'indice de réfraction du matériau.

2. Procédé de traitement selon la revendication 1, dans lequel
une pluralité des premiers segments de ligne (L1) sont fixés, et
l'émission de la lumière laser le long de chacune des parties irradiées en fonction de la pluralité des premiers segments de ligne (L1).

3. Procédé de traitement selon les revendications 1 ou 2, dans lequel
le premier segment de ligne (L1) et le second segment de ligne (L2) sont orthogonaux l'un par rapport à l'autre.

4. Procédé de traitement selon les revendications 2 ou 3, dans lequel
lorsqu'il y a des couches de pièces irradiées dans une direction d'émission de la lumière laser, les couches de pièces irradiées sont irradiées avec la lumière laser dans l'ordre de la partie irradiée la plus éloignée de la surface du matériau dans laquelle la lumière laser pénètre.

5. Système de traitement (100) qui est configuré pour irradier un matériau (M) transmissible par la lumière avec une lumière laser pour effectuer une ablation afin de couper une partie inutile du matériau (M), comprenant:
un émetteur (10) qui est configuré pour émettre la lumière laser ;
un détenteur (20) qui est configuré pour détenir le matériel (M) ; et
un mécanisme d'entraînement (30) qui est configuré pour déplacer l'émetteur (10) et le support (20) l'un par rapport à l'autre;
le système de traitement (100) étant **caractérisé en ce qu'il** comprend
un dispositif de commande (2) qui est configuré pour commander l'émetteur (10) et le mécanisme d'entraînement (30) pour former une pièce découpée dans le matériau (M) en irradiant la lumière laser le long d'une pièce irradiée sur la base d'un premier segment de ligne (L1) placé dans une direction prédéterminée, et en irradiant la lumière laser le long de chacune des pièces irradiées sur la base d'une pluralité de seconds segments de ligne (L2) placés dans une direction différente de la direction prédéterminée, et
la prise en considération de la contribution de l'indice de réfraction du matériau et en corrigeant la relation de position relative entre l'émetteur (10) et le support (20).

6. Programme de traitement informatique comprenant des instructions pour que le responsable du système de traitement selon la revendication 5 effectue le processus suivant :
l'émission d'une lumière laser d'un matériau transmissible à la lumière (M) pour effectuer une ablation afin de couper une partie inutile du matériau (M),
**caractérisé en ce que**
l'émission de la lumière laser le long d'une partie irradiée sur la base d'un premier segment de ligne (L1) suit une direction prédéterminée,
l'émission de la lumière laser le long de chacune des pièces irradiées sur la base d'une pluralité de seconds segments de ligne (L2) placés dans une direction différente de la direction prédéterminée pour former une pièce découpée, et
l'émission par la lumière laser d'une position avec correction de ladite position en prenant en considération la contribution de l'indice de réfraction du matériau.
